# FASCICULE DE BREVET EUROPEEN

(11) **EP 4 377 159 B1**
(45) Date de publication et mention de la délivrance du brevet: **03.12.2025**
(21) Numéro de dépôt: 22744257.1
(22) Date de dépôt: 21.06.2022
(51) Int. Cl.: B60R 19/18, B60R 19/34

(54) **VÉHICULE AUTOMOBILE AVEC UNE STRUCTURE DE CAISSE COMPORTANT UN PARE-CHOCS AVANT**
KRAFTFAHRZEUG MIT EINER EINEN FRONTSTOSSFÄNGER AUFWEISENDEN KAROSSERIESTRUKTUR
MOTOR VEHICLE WITH A BODY STRUCTURE HAVING A FRONT BUMPER

(30) Priorité: 26.07.2021 FR 2108084
(43) Date de publication de la demande: 05.06.2024
(73) Titulaire: Stellantis Auto SAS, 78300 Poissy (FR)
(72) Inventeur: PERON, Rodolphe, 95220 HERBLAY (FR); ROYER, Guillaume, 91680 BRUYERES LE CHATEL (FR)
(74) Mandataire: BCIP
(86) Numéro de dépôt international: PCT/FR2022/051205
(87) Numéro de publication internationale: WO 2023/007064

(56) Documents cités:
- WO-A1-2011/002344
- DE-A1- 102016 200 983
- KR-A- 20200 080 459

## Description

L'invention se situe dans le domaine des véhicules automobiles, et en particulier dans le domaine qui se rapporte à la gestion des chocs subis par les véhicules automobiles. Ainsi, l'invention a trait à des véhicules automobiles comprenant une structure de caisse comportant un pare-chocs avant. L'invention concerne également un procédé pour le montage d'un tel véhicule.

En cas de choc frontal, l'énergie induite dans un véhicule automobile va déformer la structure de caisse. Afin de limiter la déformation, la structure de caisse comprend un dispositif de pare-chocs, comprenant une poutre de pare-chocs montée sur deux absorbeurs, disposés dans le prolongement des longerons définissant le soubassement du véhicule. Lors d'un choc frontal couplé à un choc latéral, à faible vitesse, il est utile de faire en sorte que l'absorbeur de choc soit protégé autant que possible. L'art antérieur montre ainsi différentes possibilités afin de conserver l'intégrité de l'absorbeur de choc.

Le document US 10,086,784 décrit une unité de pare-chocs qui permet d'améliorer le comportement de la structure du véhicule en cas de choc frontal avec un faible recouvrement. Un élément de déformation replié latéralement sur l'absorbeur permet d'encaisser les efforts latéraux subis par le véhicule dans de tels conditions de chocs. L'élément de déformation est relié à la traverse par des boulons. Ces moyens de rattachement doivent non seulement être rajoutés lors du montage du véhicule mais sont susceptibles de rompre, en premier lieu lorsque l'effort subi par le véhicule est un peu plus important.

Le document DE 2020012003073 décrit une traverse de pare-chocs avec, à chaque extrémité de la traverse, une section d'extrémité s'étendant transversalement au-delà de l'absorbeur correspondant et un déviateur conçu pour être disposé incliné vers l'arrière du véhicule, afin de protéger l'absorbeur en cas de choc frontal avec un faible recouvrement subi par le véhicule. La section transversale du déviateur est plus faible que la section transversale de la traverse. Ainsi, en cas de choc, le déviateur rentre en contact avec l'absorbeur avec très peu de chevauchement et est soutenu par celui-ci, ce qui permet d'empêcher la section d'extrémité dépassant de l'absorbeur de se déformer dans la limite de la violence du choc. Dans cette configuration, en cas de choc frontal avec également un effort induit latéralement, l'absorbeur finit par soutenir les éléments censés le protéger en cas d'impact, ce qui n'est pas idéal.

Le document DE102016200983A1 divulgue une structure de caisse avec deux absorbeurs d'après le préambule de la revendication 1.

L'invention a pour objectif de répondre à au moins un des problèmes ou inconvénients rencontrés dans l'art antérieur. En particulier, l'invention a pour objectif d'améliorer le comportement de la structure de caisse d'un véhicule automobile lorsque celui-ci est confronté à un choc frontal avec un recouvrement latéral de l'effort. L'invention a pour objectif d'offrir une protection latérale optimale de l'absorbeur qui permet le montage du pare-chocs avant.

A cet effet et selon un premier aspect, l'invention a pour objet un véhicule automobile comprenant une structure de caisse avec deux absorbeurs, chaque absorbeur montrant au moins un côté externe, et avec une poutre de pare-chocs montrant une face avant et comprenant une zone centrale montée sur lesdits deux absorbeurs, le véhicule est remarquable en ce que la zone centrale se prolonge par deux zones latérales, chaque zone latérale s'étendant depuis le côté externe d'un absorbeur vers un côté latéral du véhicule, et en ce que chaque zone latérale montre sur la face avant une encoche disposée à un niveau situé à proximité de l'absorbeur, ladite encoche s'étendant sur la hauteur de la zone latérale.

Comme on l'aura compris à la lecture de la définition qui vient d'en être donnée, l'invention propose de réaliser un véhicule automobile dont la structure de caisse montre une poutre de pare-chocs présentant une zone centrale montée entre les deux absorbeurs et deux zones latérales dans le prolongement de ladite zone centrale. La particularité de l'invention est de faire en sorte que ces zones latérales qui s'étendent depuis le côté externe d'un absorbeur vers un côté latéral du véhicule disposent d'une encoche qui permettra à la zone latérale de se plier en cas de choc frontal à faible vitesse induisant également un effort latéral. Ainsi, selon l'invention, l'encoche ne doit pas être alignée sur l'absorbeur mais elle est décalée sur le côté, c'est-à-dire au niveau de la zone latérale. L'encoche sert donc d'amorce de pliage et permet à la zone latérale de se plier vers l'arrière du véhicule, sans pour autant impliquer, dans la limite de la violence du choc, l'absorbeur.

On aura également compris à la lecture de la définition de l'invention que la zone centrale et les zones latérales forment une pièce unique, ce qui évite l'utilisation de moyen de rattachement entre les deux zones. Cette configuration permet non seulement de garantir la robustesse de la poutre de pare-chocs mais aussi d'en simplifier la fabrication.

De manière préférée, ladite encoche s'étend sur la hauteur de la poutre de pare-chocs.

De manière avantageuse, chaque zone latérale montre une extrémité libre et chaque zone latérale montre une forme biseautée depuis le niveau de ladite encoche jusqu'à l'extrémité libre.

Selin l'invention la zone centrale est un profilé en forme de U avec un fond correspondant à la face avant, les bras du U formant respectivement une face supérieure et une face inférieure et chaque zone latérale montre une partie supérieure et/ou une partie inférieure. La partie supérieure est définie comme étant un profilé avec une section en U avec un fond correspondant à une face disposée en arrière de la face avant, un des deux bras du U correspondant au prolongement de la face supérieure de la zone centrale et l'autre des deux bras du U correspondant à une face inférieure de la partie supérieure de la zone latérale. La partie inférieure est définie comme étant un profilé avec une section en U avec un fond correspondant à une face disposée en arrière de la face avant, un des deux bras du U correspondant au prolongement de la face inférieure de la zone centrale et l'autre des deux bras du U correspondant à une face supérieure de la partie inférieure de la zone latérale.

De préférence, chaque zone latérale montre une partie supérieure et une partie inférieure.

Par exemple, la poutre de pare-chocs a un profil galbé au niveau de la zone centrale et des zones latérales.

Par exemple, chaque zone latérale montre une longueur comprise entre 7% et 15% de la longueur de la zone centrale, préférablement entre 9% et 13%, plus préférablement entre 10% et 12%.

Par exemple, chaque zone latérale présente une longueur qui est inférieure à la longueur d'un absorbeur.

Par exemple, l'encoche présente une longueur qui est entre deux et quatre fois plus grande que sa profondeur.

Selon une mise en oeuvre de l'invention, la structure de caisse comprend une plaque métallique rapportée sur l'avant de chaque zone latérale. De préférence, une des extrémités latérales de la plaque métallique est soudée sur la zone centrale. Avantageusement, la plaque métallique comprend au moins un trou de positionnement. Par exemple, l'épaisseur de la plaque métallique est inférieure ou égale à l'épaisseur de la face avant de la poutre de pare-chocs ; de préférence, l'épaisseur de la plaque métallique est égale à l'épaisseur de la face avant de la poutre de pare-chocs.

Alternativement, la structure de caisse comprend une plaque en plastique rapportée sur l'avant de chaque zone latérale. De préférence, la plaque en plastique est clipsée à la zone latérale. Par exemple, l'épaisseur de la plaque en plastique est inférieure ou égale à l'épaisseur de la face avant de la poutre de pare-chocs ; de préférence, l'épaisseur de la plaque en plastique est égale à l'épaisseur de la face avant de la poutre de pare-chocs.

Selon un second aspect, l'invention concerne un procédé de montage d'un véhicule automobile selon le premier aspect, ledit procédé comprenant une étape (a) de fourniture d'une structure de caisse avec deux absorbeurs, chaque absorbeur montrant au moins un côté externe, et une étape (c) de montage d'au moins une zone centrale d'une poutre de pare-chocs sur lesdits deux absorbeurs, ledit procédé est remarquable en ce que la zone centrale se prolonge par deux zones latérales, chaque zone latérale s'étendant depuis le côté externe d'un absorbeur vers un côté latéral du véhicule, et en ce qu'il comprend une étape (b) de formation d'une encoche s'étendant sur la hauteur de la zone latérale, l'étape (b) de formation d'une encoche étant effectuée au niveau de la face avant de chaque zone latérale à un niveau situé à proximité de l'absorbeur, l'étape (b) étant effectuée après l'étape (a) et avant l'étape (c).

Avantageusement, l'étape (b) est effectuée par usinage.

L'invention sera bien comprise et d'autres aspects et avantages apparaîtront clairement à la lecture de la description qui suit donnée en référence aux figures annexées sur lesquelles :
[Fig. 1] La figure 1 est une vue du côté droit de la structure de caisse du véhicule automobile selon l'invention.
[Fig. 2] La figure 2 est un agrandissement de la partie montrant notamment la zone latérale de la poutre de pare-chocs de la structure de caisse du véhicule automobile selon l'invention.
[Fig. 3] La figure 3 est un agrandissement de la figure 2 au niveau de l'encoche montrée par la zone latérale.
[Fig. 4] La figure 4 est une vue du côté droit de la structure de caisse du véhicule automobile selon une mise en oeuvre préférée de l'invention.

Dans la description qui suit, le terme « comprendre » est synonyme de « inclure » et n'est pas limitatif en ce qu'il autorise la présence d'autres éléments dans le véhicule ou dans le procédé auquel il se rapporte. Il est entendu que le terme « comprendre » inclut les termes « consister en ». Les termes « inférieur » et « supérieur » s'entendront dans leur sens général, le terme « inférieur » désignant une proximité avec le sol plus importante. Les termes « avant » et « arrière » correspondent à l'orientation du véhicule pris dans son sens normal de roulage. Les termes « externe » et « interne » désigneront respectivement ce qui est orienté vers l'extérieur du véhicule et vers l'intérieur du véhicule.

Sur les différentes figures, les mêmes références désignent des éléments identiques ou similaires.

Un véhicule automobile dispose généralement d'une structure de caisse avec deux absorbeurs 1, chaque absorbeur 1 montrant au moins un côté externe 3, et d'une poutre 5 de pare-chocs montrant une face avant 7 et comprenant une zone centrale 9 montée sur lesdits deux absorbeurs 1. Lors d'un choc frontal, la poutre 5 de pare-chocs encaisse l'effort qui est amorti par les deux absorbeurs 1. Ceux-ci sont par exemple reliés aux longerons du véhicule par une platine 35. En cas de choc frontal avec recouvrement de l'effort sur les côtés du véhicule, ce qui peut arriver en cas de chocs du type « choc-piéton », l'effort latéral que subit la structure de caisse du véhicule peut venir interférer avec l'absorbeur et/ou la platine, engendrant, même à faible vitesse, des dégâts considérables au soubassement du véhicule. Dans ces circonstances, les coûts de réparation du véhicule peuvent s'élever facilement vu que l'ensemble du soubassement peut être impacté.

Dès lors, l'invention propose de protéger l'absorbeur 1 en cas de cas de choc du type « choc-piéton », dans la limite de la violence du choc.

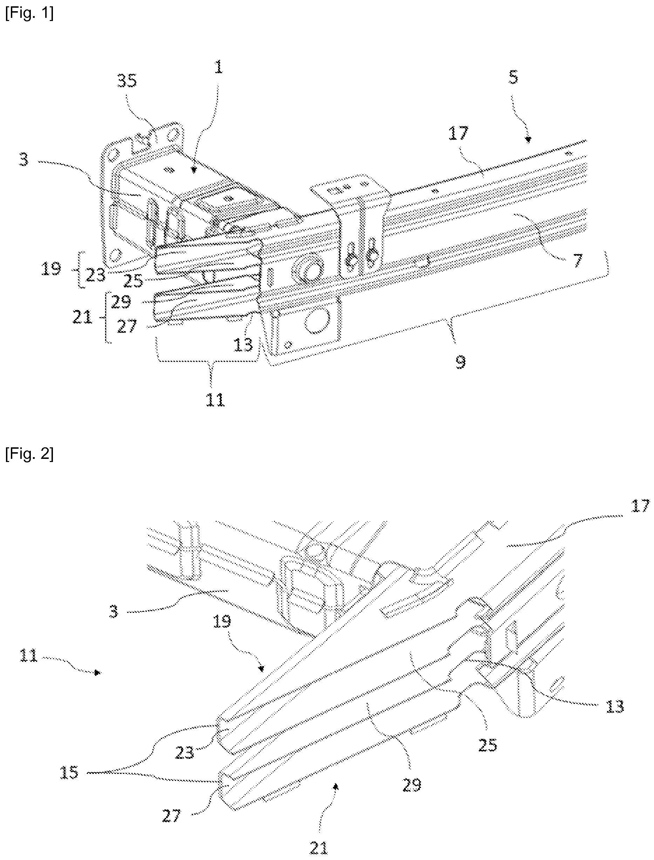

Ainsi, selon l'invention, et comme illustré sur la figure 1 pour le côté droit du véhicule, celui-ci est remarquable en ce que la zone centrale 9 se prolonge par deux zones latérales 11, chaque zone latérale 11 s'étendant depuis le côté externe 3 d'un absorbeur 1 vers un côté latéral du véhicule, et en ce que chaque zone latérale 11 montre sur la face avant 7 une encoche 13 disposée à un niveau situé à proximité de l'absorbeur 1, ladite encoche 13 s'étendant sur la hauteur de la zone latérale 11, préférablement sur la hauteur de la poutre 5 de pare-chocs.

L'invention offre donc une protection supplémentaire qui permet de protéger le côté externe 3 de l'absorbeur 1. Lors d'un choc frontal, l'encoche 13 va permettre à la zone latérale 11 de se plier pour que la face arrière de celle-ci se retrouver face au côté externe 3 de l'absorbeur 1. La création de l'encoche 13 au niveau de la zone latérale 11 permet de créer un axe de rotation autour duquel la zone latérale peut se rabattre vers le coté externe 3 de l'absorbeur. A faible vitesse, cette disposition permet de préserver l'impact sur l'absorbeur 1 dans la limite de la violence du choc et donc de réduire les frais de réparation à uniquement la poutre 5 de pare-chocs.

Par exemple, chaque zone latérale 11 présente une longueur qui est inférieure à la longueur d'un absorbeur 1. Ainsi, lors du choc frontal à recouvrement latéral, la zone latérale 11 se plie pour montrer sa face arrière face au côté externe 3 de l'absorbeur 1 sans pour autant toucher la platine 35 qui permet de relier ledit absorbeur 1 au longeron du véhicule. La configuration selon l'invention permet donc de protéger l'absorbeur 1 sans impliquer la platine 35.

Il est également remarquable que les zones latérales 11 et la zone centrale 9 sont venues de matière et font donc partie de la même pièce, à savoir la poutre 5 de pare-chocs. Cela confère une grande robustesse à ladite poutre 5.

Comme montré sur la figure 2, chaque zone latérale 11 montre une extrémité libre 15. La zone latérale 11 peut montrer une forme biseautée depuis le niveau de ladite encoche 13 jusqu'à l'extrémité libre 15. La forme biseautée permet de diminuer la rigidité de la zone latérale 11 en diminuant progressivement la distance de séparation entre la face avant 7 et la face disposée en arrière de la face avant. Cela favorise le pliage de la zone latérale 11 vers l'arrière en cas de choc frontal avec recouvrement latéral de l'effort et donc cela améliore les capacités de protection de l'absorbeur 1.

La zone centrale 9 est un profilé en forme de U avec un fond correspondant à la face avant 7, les bras du U formant respectivement une face supérieure 17 et une face inférieure et chaque zone latérale 11 peut montrer une partie supérieure 19 définie comme étant un profilé avec une section en U avec un fond correspondant à une face 23 disposée en arrière de la face avant 7, un des deux bras du U correspondant au prolongement de la face supérieure 17 de la zone centrale et l'autre des deux bras du U correspondant à une face inférieure 25 de la partie supérieure de la zone latérale. Par exemple, la partie supérieure 19 peut s'étendre jusqu'à au plus 50% de la hauteur mesurée à partir de la face supérieure 17 de la zone centrale 9 jusqu'à la face inférieure de la zone centrale 9, préférentiellement jusqu'à au plus 45% ou jusqu'à au plus 40%. Cela permet de limiter l'apport de matière lors de la création de la zone latérale 11 en comparaison avec une structure de caisse dépourvue d'une poutre 5 de pare-chocs montrant une zone latérale 11 s'étendant depuis le côté externe 3 d'un absorbeur 1 vers un côté latéral du véhicule.

De façon similaire, la zone centrale 9 est un profilé en forme de U avec un fond correspondant à la face avant 7, les bras du U formant respectivement une face supérieure 17 et une face inférieure et chaque zone latérale 11 peut montrer une partie inférieure 21 définie comme étant un profilé avec une section en U avec un fond correspondant à une face 27 disposée en arrière de la face avant 7, un des deux bras du U correspondant au prolongement de la face inférieure de la zone centrale et l'autre des deux bras du U correspondant à une face supérieure 29 de la partie inférieure de la zone latérale. Par exemple, la partie inférieure 21 peut s'étendre jusqu'à au plus 50% de la hauteur mesurée à partir de la face inférieure de la zone centrale 9 jusqu'à la face supérieure 17 de la zone centrale 9, préférentiellement jusqu'à au plus 45% ou jusqu'à au plus 40%. Cela permet également de limiter l'apport de matière lors de la création de la zone latérale 11 en comparaison avec une structure de caisse dépourvue d'une poutre 5 de pare-chocs montrant une telle zone latérale 11.

De préférence, comme montré sur les figures, chaque zone latérale 11 montre à la fois une partie supérieure 19 et une partie inférieure 21, ce qui permet d'offrir une protection sur l'ensemble de la hauteur de la poutre 5 de pare-chocs. Il est à noter que la face 23 de la partie supérieure 19 et disposée en arrière de la face avant 7 et la face 27 de la partie inférieure 21 et également disposée en arrière de la face avant 7 sont préférablement dans le même plan.

Par exemple, la partie supérieure 19 peut s'étendre jusqu'à au plus 50% de la hauteur mesurée à partir de la face supérieure 17 de la zone centrale jusqu'à la face inférieure de la zone centrale, préférentiellement jusqu'à au plus 45% ou jusqu'à au plus 40% et la partie inférieure 21 peut s'étendre jusqu'à au plus 50% de la hauteur mesurée à partir de la face inférieure de la zone centrale jusqu'à la face supérieure 17 de la zone centrale, préférentiellement jusqu'à au plus 45% ou jusqu'à au plus 40%.

Plus préférentiellement, la partie supérieure 19 s'étend jusqu'à moins de 50% de la hauteur mesurée à partir de la face supérieure 17 de la zone centrale jusqu'à la face inférieure de la zone centrale, encore plus préférentiellement jusqu'à moins de 45%, ou jusqu'à moins de 40%, et la partie inférieure s'étend jusqu'à moins de 50% de la hauteur mesurée à partir de la face inférieure de la zone centrale jusqu'à la face supérieure 17 de la zone centrale, encore plus préférentiellement jusqu'à moins de 45%, ou jusqu'à moins de 40%. Dans ce cas, non seulement l'apport de matière est limité par rapport à une structure de caisse dépourvue d'une poutre 5 de pare-chocs montrant une zone latérale 11 s'étendant depuis le côté externe 3 d'un absorbeur 1 vers un côté latéral du véhicule, mais la protection de l'absorbeur 1 est également avantageusement conférée sur l'ensemble de la hauteur de la poutre 5 de pare-chocs.

Par exemple, la poutre 5 de pare-chocs a un profil galbé au niveau de la zone centrale 9 et des zones latérales 11.

Par exemple, chaque zone latérale 11 montre une longueur comprise entre 7% et 15% de la longueur de la zone centrale 9, préférablement entre 8% et 14%, plus préférablement entre 9% et 13%, ou entre 10% et 12%.

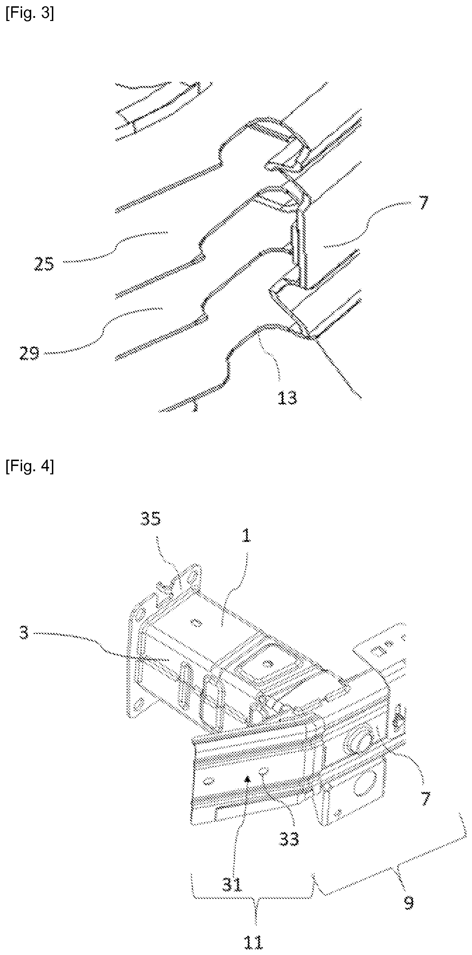

Comme visible sur l'agrandissement de la figure 3, l'encoche 13 peut présenter avantageusement une longueur qui est entre deux et quatre fois plus grande que sa profondeur afin de permettre le pliage de la zone latérale tout en lui permettant de conserver une certaine rigidité. Ainsi, la longueur de l'encoche peut par exemple être comprise entre 5 mm et 10 mm et la profondeur de l'encoche peut être comprise entre 2,5 mm et 5 mm.

Le prolongement de la face supérieure 17 et/ou de la face inférieure de la zone centrale 9, ainsi que la présence d'une face inférieure 25 de la partie supérieure de la zone latérale et/ou d'une face supérieure 29 de la partie inférieure de la zone latérale induit la présence d'arêtes tournées vers l'avant du véhicule. Ces arêtes peuvent se montrer agressives, en l'occurrence coupantes, vis-à-vis de l'obstacle lors du choc subi par le véhicule, notamment si l'obstacle s'avère être un piéton. Ainsi, dans une mise en oeuvre préférée de l'invention, illustrée à la figure 4, la structure de caisse comprend une plaque métallique 31 rapportée sur l'avant de chaque zone latérale 11.

De préférence, une des extrémités latérales de la plaque métallique 31 est soudée sur la zone centrale 9, par exemple au moyen d'un point de soudure avec apport de matière. Avantageusement, la plaque métallique 31 comprend au moins un trou 33 de positionnement qui permet de positionner correctement la plaque métallique 31 lors de son montage sur la zone latérale 31. Par exemple, la plaque métallique 31 comprend deux trous 33 de positionnement.

Par exemple, l'épaisseur de la plaque métallique 31 est inférieure ou égale à l'épaisseur de la face avant 7 de la poutre de pare-chocs ; de préférence, l'épaisseur de la plaque métallique 31 est égale à l'épaisseur de la face avant 7 de la poutre de pare-chocs.

Alternativement à la plaque métallique 31, un système hybride plastique/métal peut être utilisé à des fins d'allègement du véhicule. Ainsi, la structure de caisse peut comprendre une plaque en plastique rapportée sur l'avant de chaque zone latérale (en acier). De préférence, la plaque en plastique est clipsée à la zone latérale. Par exemple, l'épaisseur de la plaque en plastique est inférieure ou égale à l'épaisseur de la face avant de la poutre de pare-chocs ; de préférence, l'épaisseur de la plaque en plastique est égale à l'épaisseur de la face avant de la poutre de pare-chocs.

L'invention a également pour objet un procédé de montage d'un véhicule automobile tel que décrit plus haut. Le procédé comprend une étape (a) de fourniture d'une structure de caisse avec deux absorbeurs 1, chaque absorbeur 1 montrant au moins un côté externe 3, et une étape (c) de montage d'au moins une zone centrale 9 d'une poutre de pare-chocs sur lesdits deux absorbeurs 1.

Le procédé selon l'invention est remarquable en ce que la zone centrale 9 se prolonge par deux zones latérales 11, chaque zone latérale 11 s'étendant depuis le côté externe 3 d'un absorbeur 1 vers un côté latéral du véhicule, et en ce qu'il comprend une étape (b) de formation d'une encoche 13 s'étendant sur la hauteur de la zone latérale 11, l'étape (b) de formation d'une encoche 13 étant effectuée au niveau de la face avant 7 de chaque zone latérale 11 à un niveau situé à proximité de l'absorbeur 1, l'étape (b) étant effectuée après l'étape (a) et avant l'étape (c).

Avantageusement, l'étape (b) est effectuée par usinage, par exemple à l'aide de machines-outil à commande numérique.

Il est intéressant de noter que la poutre 5 de pare-chocs utilisée dans le procédé décrit plus haut est une pièce monolithe comportant à la fois une zone centrale 9 et deux zones latérales 11 s'étendant depuis le côté externe 3 de l'absorbeur 1 correspondant vers un côté latéral du véhicule. Les zones latérales 11 ne sont donc pas rapportées sur la zone centrale 9 de la poutre de pare-chocs, ce qui permet d'éviter d'utiliser des moyens de rattachement entre la zone centrale 9 et les zones latérales 11 et de simplifier le déroulement du procédé.

## Revendications

1. Véhicule automobile comprenant une structure de caisse avec deux absorbeurs (1), chaque absorbeur (1) montrant au moins un côté externe (3), et avec une poutre (5) de pare-chocs montrant une face avant (7) et comprenant une zone centrale (9) montée sur lesdits deux absorbeurs (1), la zone centrale (9) se prolongeant par deux zones latérales (11), chaque zone latérale (11) s'étendant depuis le côté externe (3) d'un absorbeur (1) vers un côté latéral du véhicule, et en ce que chaque zone latérale (11) montre sur la face avant (7) une encoche (13) disposée à un niveau situé à proximité de l'absorbeur (1), ladite encoche (13) s'étendant sur la hauteur de la zone latérale (11), **caractérisé en ce que** la zone centrale (9) est un profilé en forme de U avec un fond correspondant à la face avant (7), les bras du U formant respectivement une face supérieure (17) et une face inférieure et **en ce que** chaque zone latérale (11) montre une partie supérieure (19) et/ou une partie inférieure (21) ; dans laquelle la partie supérieure (19) est définie comme étant un profilé avec une section en U avec un fond correspondant à une face (23) disposée en arrière de la face avant (7), un des deux bras du U correspondant au prolongement de la face supérieure (17) de la zone centrale et l'autre des deux bras du U correspondant à une face inférieure (25) de la partie supérieure de la zone latérale ; dans laquelle la partie inférieure (21) est définie comme étant un profilé avec une section en U avec un fond correspondant à une face (27) disposée en arrière de la face avant (7), un des deux bras du U correspondant au prolongement de la face inférieure de la zone centrale et l'autre des deux bras du U correspondant à une face supérieure (29) de la partie inférieure de la zone latérale ; de préférence, chaque zone latérale (11) montre une partie supérieure (19) et une partie inférieure (21).

2. Véhicule selon la revendication 1, **caractérisé en ce que** chaque zone latérale (11) montre une extrémité libre (15) et **en ce que** chaque zone latérale (11) montre une forme biseautée depuis le niveau de ladite encoche (13) jusqu'à l'extrémité libre (15).

3. Véhicule selon l'une des revendications 1 ou 2, **caractérisé en ce que** la poutre (5) de pare-chocs a un profil galbé au niveau de la zone centrale (9) et des zones latérales (11).

4. Véhicule selon l'une des revendications 1 à 3, **caractérisé en ce que** chaque zone latérale (11) montre une longueur comprise entre 7% et 15% de la longueur de la zone centrale (9) et/ou **en ce que** chaque zone latérale (11) présente une longueur qui est inférieure à la longueur d'un absorbeur (1).

5. Véhicule selon l'une des revendications 1 à 4, **caractérisée en ce que** l'encoche (13) présente une longueur qui est entre deux et quatre fois plus grande que sa profondeur.

6. Véhicule selon l'une des revendications 1 à 5, **caractérisé en ce que** la structure de caisse comprend une plaque métallique (31) rapportée sur l'avant de chaque zone latérale (11) ; de préférence, une des extrémités latérales de la plaque métallique est soudée sur la zone centrale (9).

7. Véhicule selon la revendication 6, **caractérisé en ce que** la plaque métallique (31) comprend au moins un trou (33) de positionnement et/ou **en ce que** l'épaisseur de la plaque métallique (31) est inférieure ou égale à l'épaisseur de la face avant (7) de la poutre de pare-chocs.

8. Procédé de montage d'un véhicule automobile selon l'une des revendications 1 à 7, ledit procédé comprenant une étape (a) de fourniture d'une structure de caisse avec deux absorbeurs (1), chaque absorbeur (1) montrant au moins un côté externe (3), et une étape (c) de montage d'au moins une zone centrale (9) d'une poutre de pare-chocs sur lesdits deux absorbeurs (1), ledit procédé est **caractérisé en ce que** la zone centrale (9) se prolonge par deux zones latérales (11), chaque zone latérale (11) s'étendant depuis le côté externe (3) d'un absorbeur vers un côté latéral du véhicule, et **en ce qu'**il comprend une étape (b) de formation d'une encoche (13) s'étendant sur la hauteur de la zone latérale (11), l'étape (b) de formation d'une encoche (13) étant effectuée au niveau de la face avant (7) de chaque zone latérale à un niveau situé à proximité de l'absorbeur (1), l'étape (b) étant effectuée après l'étape (a) et avant l'étape (c).

9. Procédé de montage selon la revendication 8, **caractérisé en ce que** l'étape (b) est effectuée par usinage.

## Patentansprüche

1. Kraftfahrzeug mit einer Aufbaustruktur mit zwei Absorbern (1), wobei jeder Absorber (1) mindestens eine Außenseite (3) aufweist, und mit einem Stoßfängerbalken (5), der eine Vorderseite (7) aufweist und einen zentralen Bereich (9) aufweist, der an den beiden Absorbern (1) angebracht ist, wobei sich der zentrale Bereich (9) durch zwei seitliche Bereiche (11) erstreckt, wobei sich jeder seitliche Bereich (11) von der Außenseite (3) eines Absorbers (1) zu einer seitlichen Seite des Fahrzeugs erstreckt, und wobei jeder seitliche Bereich (11) die Seite zeigt Vorderseite (7) eine Kerbe (13), die auf einer Höhe in der Nähe des Absorbers (1) angeordnet ist, wobei sich die Kerbe (13) über die Höhe des Seitenbereichs (11) erstreckt, **dadurch gekennzeichnet, dass** der Mittelbereich (9) ein U-förmiges Profil mit einem der Vorderseite (7) entsprechenden Boden ist, wobei die Arme des U jeweils eine Oberseite (17) und eine Unterseite bilden, und dass jeder Seitenbereich (11) einen oberen Teil (19) und/oder einen unteren Teil (21) aufweist, wobei der obere Teil (19) definiert ist als Profil mit U-förmigem Querschnitt mit einem Boden entsprechend einer hinter der Vorderseite (7) angeordneten Fläche (23), wobei einer der beiden U-Arme der Verlängerung der Oberseite (17) des Mittelbereichs entspricht und der andere der beiden U-Arme einer Unterseite (25) des Oberteils des Seitenbereichs entspricht; wobei der Unterteil (21) als Profil mit U-förmigem Querschnitt mit einem Boden entsprechend einer hinter der Vorderseite (7) angeordneten Fläche (27) definiert ist, wobei einer der beiden U-Arme der Verlängerung der Unterseite des Mittelbereichs entspricht und der andere der beiden Der Arm des U entspricht einer Oberseite (29) des unteren Teils des Seitenbereichs; vorzugsweise weist jeder Seitenbereich (11) einen oberen Teil (19) und einen unteren Teil (21) auf.

2. Fahrzeug nach Anspruch 1, **dadurch gekennzeichnet, dass** jeder Seitenbereich (11) ein freies Ende (15) aufweist und dass jeder Seitenbereich (11) eine abgeschrägte Form von der Höhe der Kerbe (13) bis zum freien Ende (15) aufweist.

3. Fahrzeug nach einem der Ansprüche 1 oder 2, **dadurch gekennzeichnet, dass** der Stoßfängerbalken (5) im Bereich des Mittelbereichs (9) und der Seitenbereiche (11) ein gewölbtes Profil aufweist.

4. Fahrzeug nach einem der Ansprüche 1 bis 3, **dadurch gekennzeichnet, dass** jeder Seitenbereich (11) eine Länge zwischen 7% und 15% der Länge des Mittelbereichs (9) aufweist und/oder dass jeder Seitenbereich (11) eine Länge aufweist, die kleiner ist als die Länge eines Absorbers (1).

5. Fahrzeug nach einem der Ansprüche 1 bis 4, **dadurch gekennzeichnet, dass** die Kerbe (13) eine Länge aufweist, die zwischen zwei- und viermal größer als ihre Tiefe ist.

6. Fahrzeug nach einem der Ansprüche 1 bis 5, **dadurch gekennzeichnet, dass** die Wagenkastenstruktur eine Metallplatte (31) umfasst, die an der Vorderseite jedes Seitenbereichs (11) angebracht ist; vorzugsweise ist eines der Seitenenden der Metallplatte mit dem Mittelbereich (9) verschweißt.

7. Fahrzeug nach Anspruch 6, **dadurch gekennzeichnet, dass** die Metallplatte (31) mindestens ein Positionierungsloch (33) aufweist und/oder dass die Dicke der Metallplatte (31) kleiner oder gleich der Dicke der Vorderseite (7) des Stoßfängerträgers ist.

8. Verfahren zur Montage eines Kraftfahrzeugs nach einem der Ansprüche 1 bis 7, wobei das Verfahren einen Schritt (a) des Bereitstellens einer Aufbaustruktur mit zwei Absorbern (1), wobei jeder Absorber (1) mindestens eine Außenseite (3) aufweist, und einen Schritt (c) des Anbringens mindestens eines zentralen Bereichs (9) eines Stoßfängerträgers an den beiden Absorbern (1) umfasst, wobei das Verfahren **dadurch gekennzeichnet ist, dass** sich der zentrale Bereich (9) durch zwei Seitenbereiche (11) erstreckt, wobei sich jeder Seitenbereich (11) von der Außenseite (3) erstreckt einem Absorber zu einer Seitenseite des Fahrzeugs hin, und **dadurch gekennzeichnet, dass** er einen Schritt (b) zur Bildung einer Kerbe (13) umfasst, die sich über die Höhe des Seitenbereichs (11) erstreckt, wobei der Schritt (b) zur Bildung einer Kerbe (13) an der Vorderseite (7) jedes Seitenbereichs auf einer Höhe in der Nähe des Absorbers (1) durchgeführt wird, wobei Schritt (b) nach Schritt (a) und vor Schritt (c) durchgeführt wird.

9. Montageverfahren nach Anspruch 8, **dadurch gekennzeichnet, dass** der Schritt (b) durch maschinelle Bearbeitung durchgeführt wird.

## Claims

1. Motor vehicle comprising a body frame with two absorbers (1), each absorber (1) showing at least one outer side (3), and with a bumper beam (5) showing a front face (7) and comprising a centre zone (9) mounted on said two absorbers (1), the centre zone (9) being extended by two lateral zones (11), each lateral zone (11) extending from the outer side (3) of an absorber (1) towards a lateral side of the vehicle, and in that each lateral zone (11) shows on the front face (7) a notch (13) arranged at a level located at the local of the absorber (1), said notch (13) extending over the height of the lateral zone (11), **characterised in that** the central zone (9) is a U-shaped profile with a bottom corresponding to the front face (7), the arms of the U respectively forming an upper face (17) and a lower face and **in that** each lateral zone (11) shows an upper part (19) and/or a lower part (21); in which the upper part (19) is defined as being a profile with a U-shaped section with a bottom corresponding to a face (23) arranged at the rear of the front face (7), one of the two arms of the U corresponding to the extension of the upper face (17) of the centre zone and the other of the two arms of the U corresponding to a lower face (25) of the upper part of the side zone; in which the lower part (21) is defined as being a profile with a U-shaped section with a bottom corresponding to a face (27) arranged at the rear of the front face (7), one of the two arms of the lower face corresponding to the extension of the centre zone and the other of the two arms of the U corresponding to an upper face (29) of the lower part of the side zone; preferably, each side zone (11) shows an upper part (19) and a lower part (21).

2. Vehicle according to claim 1, wherein each lateral zone (11) has a free end (15) and each lateral zone (11) has a bevelled shape from the level of said notch (13) to the free end (15).

3. Vehicle according to either of Claims 1 and 2, **characterised in that** the bumper beam (5) has a curved profile on the level of the centre zone (9) and of the side zones (11).

4. Vehicle according to one of Claims 1 to 3, **characterised in that** each lateral zone (11) has a length of between 7% and 15% of the length of the central zone (9) and/or **in that** each lateral zone (11) has a length which is less than the length of an absorber (1).

5. Vehicle according to one of Claims 1 to 4, **characterised in that** the notch (13) has a length which is between two and four times greater than its depth.

6. Vehicle according to one of Claims 1 to 5, **characterised in that** the body structure comprises a metal plate (31) attached to the front of each lateral zone (11); preferably, one of the lateral ends of the metal plate is welded to the centre zone (9).

7. Vehicle according to Claim 6, **characterised in that** the metal plate (31) comprises at least one positioning hole (33) and/or **in that** the thickness of the metal plate (31) is less than or equal to the thickness of the front face (7) of the bumper beam.

8. Method for assembly line a motor vehicle according to one of Claims 1 to 7, the said method comprising a step (a) of providing a body structure with two absorbers (1), each absorber (1) showing at least one outer side (3), and a step (c) of assembly line of at least one centre zone (9) of a bumper beam on the said two absorbers (1), the said method being **characterised in that** the centre zone (9) is extended by two side zones (11), each side zone (11) extending from the outer side (3) of an absorber towards a side side of the vehicle, and **in that** it comprises a step (b) of training of a notch (13) extending over the height of the side zone (11), the step (b) of training of a notch (13) being carried out at the level of the front face (7) of each side zone to a level located at the local of the absorber (1), the step (b) being carried out after step (a) and before step (c).

9. assembly line process according to Claim 8, **characterised in that** step (b) is carried out by machining.
